# EUROPEAN PATENT APPLICATION

(11) **EP 4 844 537 A1**
(43) Date of publication of application: **25.11.2026**
(21) Application number: 24924944.2
(22) Date of filing: 12.12.2024
(51) Int. Cl.: G06F 3/01, G06F 3/16

(54) **ELECTRONIC DEVICE, OPERATING METHOD THEREOF, AND STORAGE MEDIUM**

(30) Priority: 16.02.2024 KR 20240022705; 29.04.2024 KR 20240057100
(71) Applicant: Samsung Electronics Co., Ltd., Suwon-si, Gyeonggi-do 16677 (KR)
(72) Inventor: KIM, Choonho, Suwon-si, Gyeonggi-do 16677 (KR); KYUNG, Seoweon, Suwon-si, Gyeonggi-do 16677 (KR); KIM, Mooyeol, Suwon-si, Gyeonggi-do 16677 (KR); KIM, Taebin, Suwon-si, Gyeonggi-do 16677 (KR); LEE, Sangsu, Suwon-si, Gyeonggi-do 16677 (KR); JANG, Keunwon, Suwon-si, Gyeonggi-do 16677 (KR); CHO, Joonrae, Suwon-si, Gyeonggi-do 16677 (KR); HWANG, Hochul, Suwon-si, Gyeonggi-do 16677 (KR)
(74) Representative: HGF
(86) International application number: PCT/KR2024/096753
(87) International publication number: WO 2025/173920

(57) **Abstract**

An electronic device is disclosed. The electronic device comprises: a plurality of speakers; at least one microphone; a memory for storing instructions; and at least one processor. When executed by the at least one processor, the instructions cause the electronic device to: execute an application related to translation; check settings, set in response to the application, of each of the plurality of speakers; and, in response to inputting a first sound corresponding to a first language into the at least one microphone, output, through at least one speaker from among the plurality of speakers, on the basis of the checked settings, the second sound corresponding to a second language, obtained by converting the input first sound through an automatic speech recognition (ASR) module.

## Description

### [Technical Field]

The disclosure relates to an electronic device for outputting a sound, an operating method thereof, and a storage medium according to an embodiment.

### [Background Art]

Owing to the remarkable development of information and communication technology and semiconductor technology, the supply and use of various electronic devices are rapidly increasing. Electronic devices are developed so that they are used for communication while being carried. An electronic device may refer to a device that performs specific functions based on a built-in program, such as a mobile communication terminal, a tablet PC, a video/audio device, a desktop/laptop computer, or a vehicle navigation device.

The number of various services and additional functions provided through electronic device, for example, portable electronic devices such as smartphones, is gradually increasing. In order to increase the utility value of these electronic devices and satisfy the needs of various users, communication service providers or electronic device manufacturers have provided various functions and competitively developed electronic devices to differentiate themselves from other companies. Accordingly, various functions provided through electronic devices have also been increasingly sophisticated. For example, an electronic device is configured to recognize a voice input through the electronic device and to convert the recognized voice into text-type data or perform translation on the recognized voice.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

An electronic device according to an embodiment of the disclosure may include a plurality of speakers, at least one microphone, memory storing instructions, and at least one processor.

According to an embodiment, the instructions, when executed by the at least one processor individually or collectively, may cause the electronic device to execute an application related to translation.

According to an embodiment, the instructions, when executed by the at least one processor individually or collectively, may cause the electronic device to identify a setting for each of the plurality of speakers, the setting being set corresponding to the application.

According to an embodiment, the instructions, when executed by the at least one processor individually or collectively, may cause the electronic device to, in response to a first sound corresponding to a first language being input through the at least one microphone, output, through at least one speaker among the plurality of speakers, a second sound corresponding to a second language based on the identified setting, the second sound being converted from the input first sound through an automatic speech recognition (ASR) module.

A method for operating an electronic device according to an embodiment of the disclosure may include executing an application related to translation.

According to an embodiment, the method may include identifying a setting for each of a plurality of speakers, the setting being set corresponding to the application.

According to an embodiment, the method may include, in response to a first sound corresponding to a first language being input through at least one microphone, outputting, through at least one speaker among the plurality of speakers, a second sound corresponding to a second language based on the identified setting, the second sound being converted from the input first sound through an ASR module.

In a computer-readable storage medium storing instructions according to an embodiment of the disclosure, the instructions, when executed by at least one processor of an electronic device individually or collectively, may cause the electronic device to execute an application related to translation.

According to an embodiment, the instructions, when executed by the at least one processor individually or collectively, may cause the electronic device to identify a setting for each of the plurality of speakers, the setting being set corresponding to the application.

According to an embodiment, the instructions, when executed by the at least one processor individually or collectively, may cause the electronic device to, in response to a first sound corresponding to a first language being input through the at least one microphone, output, through at least one speaker among the plurality of speakers, a second sound corresponding to a second language based on the identified setting, the second sound being converted from the input first sound through an ASR module.

### [Brief Description of Drawings]

In connection with the description of the drawings, the same or similar reference numerals may be used for the same or similar components.
FIG. 1 is a block diagram illustrating an electronic device in a network environment according to an embodiment.
FIG. 2 is a block diagram illustrating components of an electronic device according to an embodiment.
FIG. 3 is a flowchart illustrating a method for operating an electronic device according to an embodiment.
FIG. 4A is a diagram illustrating a setting for each of a plurality of speakers according to an embodiment.
FIG. 4B is a diagram illustrating a method for outputting a sound according to an embodiment.
FIG. 5 is a flowchart illustrating a method for outputting a second sound according to an embodiment.
FIG. 6 is a flowchart illustrating a method for outputting a second sound according to an embodiment.
FIG. 7 is a flowchart illustrating a method for identifying a weight associated with conversion according to an embodiment.
FIG. 8 is a flowchart illustrating a method for identifying a second sound according to an embodiment.
FIG. 9 is a flowchart illustrating a method for identifying a second sound based on noise according to an embodiment.
FIG. 10 is a flowchart illustrating a method for operating an electronic device according to an embodiment.

### [Mode for Carrying out the Invention]

With reference to the accompanying drawings, embodiments of the disclosure will be described below in detail so that those skilled in the art may easily implement them. However, the disclosure may be implemented in various different forms and is not limited to the embodiments described herein. In connection with the description of the drawings, the same or similar reference numerals may be used for the same or similar components. In addition, in the drawings and related descriptions, a description of well-known functions and configurations may be avoided for clarity and conciseness.

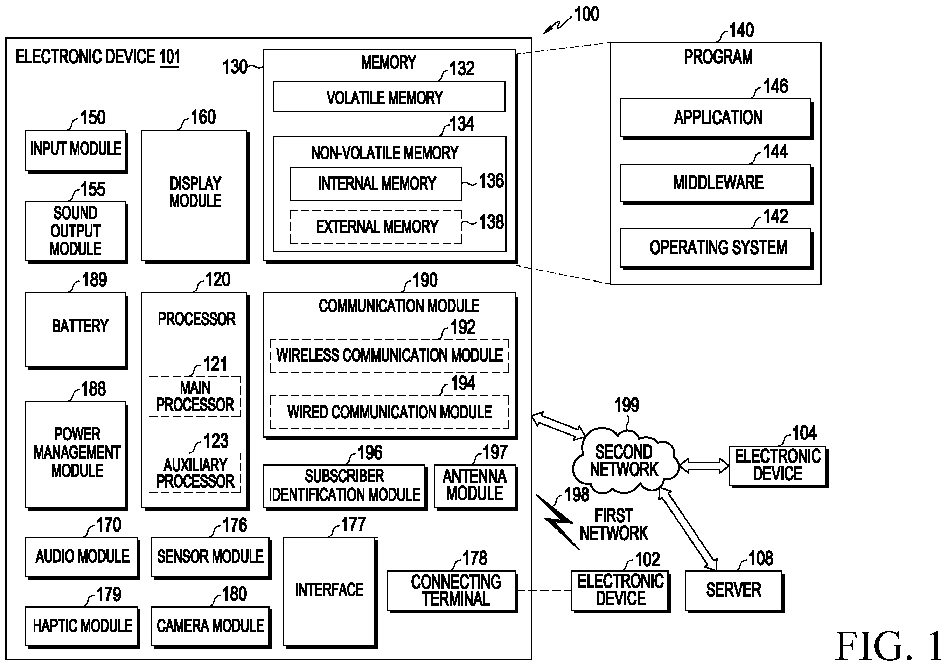

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, components that may be easily understood from the preceding embodiments will be assigned the same reference numerals in the drawings or omitted, and a detailed description thereof may also be omitted. An electronic device according to an embodiment of the disclosure may be implemented by selectively combining components of different embodiments, and a component of one embodiment may be replaced by a component of another embodiment. For example, it should be noted that the disclosure is not limited to specific drawings or embodiments.

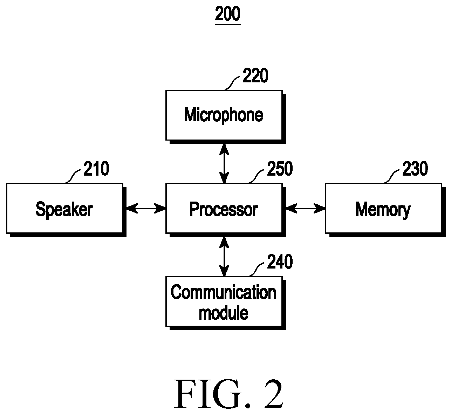

FIG. 2 is a block diagram illustrating components of an electronic device according to an embodiment.

Referring to FIG. 2, according to an embodiment, an electronic device 200 (e.g., the electronic device 101 of FIG. 1) may include a speaker 210, a microphone 220, memory 230 (e.g., the memory 130 of FIG. 1) storing instructions, a communication module 240 (e.g., the communication module 190 of FIG. 1), and at least one processor 250.

In an embodiment, the speaker 210 may be configured to be at least partially identical or similar to the sound output module 155 of FIG. 1. In an embodiment, a plurality of speakers 210 may be provided. In an embodiment, each speaker 210 (or each of the plurality of speakers) may be disposed at a different location in the electronic device 200. In an embodiment, the plurality of speakers 210 may output sound signals (or sound) to the outside of the electronic device 200.

In an embodiment, the microphone 220 may be configured to be at least partially identical or similar to the input module 150 of FIG. 1. In an embodiment, the microphone 220 may receive a sound signal. In an embodiment, the electronic device 200 may include one or more microphones.

In an embodiment, the memory 230 may be configured to be at least partially identical or similar to the memory 130 of FIG. 1. For example, the memory 230 is for temporarily or permanently storing digital data, and may include at least a portion of the configuration and/or functions of the memory 130 of FIG. 1.

The memory 230 according to an embodiment may store various instructions that may be executed by the at least one processor 250. In addition, the memory 230 may store at least a portion of the program 140 of FIG. 1. These instructions may include control commands such as logical operations and data input/output that may be recognized and executed by the processor 250. Although the type and/or amount of data that may be stored in the memory 230 is not limited, the configuration and function of the memory related to a method for outputting a sound according to various embodiments and operations of the processor 250 that performs the method will be described herein. The memory 230 may store various pieces of information, which will be described in detail later.

The communication module 240 according to an embodiment may be configured to be at least partially identical or similar to the communication module 190 of FIG. 1. In an embodiment, the electronic device 200 may receive a sound (or an electrical signal corresponding to a sound) corresponding to the other party of a call through the communication module 240. In an embodiment, the electronic device 200 may transmit and receive information to and from an external device (e.g., the server 108 of FIG. 1) through the communication module.

In an embodiment, the at least one processor 250 (hereinafter, processor) may be configured to be at least partially identical or similar to the processor 120 of FIG. 1. In an embodiment, the processor 250 may include one or more processors.

In an embodiment, the processor 250 may execute instructions stored in the memory 230 to perform various operations.

In an embodiment, the processor 250 may execute a translation-related application. In an embodiment, the translation-related application may be an application for performing translation on a sound input during a call. In an embodiment, the processor 250 may use the translation-related application to perform translation on a sound (e.g., a caller's sound) input through the microphone 220 (or at least one microphone) included in the electronic device 200. Alternatively, in an embodiment, the translation-related application may perform translation on a sound (e.g., a receiver's sound) received through the communication module 240 (e.g., the communication module 190 of FIG. 1). However, the disclosure is not limited thereto, and the processor 250 may receive a sound through a different type of input module (e.g., the input module 150 of FIG. 1) other than the communication module 240, and perform translation on the received sound. In an embodiment, the processor 250 may translate a sound input during a call into a designated language through the translation-related application, and output the translated sound through at least one of the plurality of speakers 210.

In an embodiment, the processor 250 may identify a setting for each of the plurality of speakers 210 according to the execution of the application. In an embodiment, the setting for each of the plurality of speakers 210 may be a setting for turning on/off at least one of the plurality of speakers 210. Alternatively, in an embodiment, the setting for each of the plurality of speakers 210 may be a setting for adjusting the volume of an output signal corresponding to at least one of the plurality of speakers 210. In an embodiment, when the translation-related application is executed, the processor 250 may identify the setting for each of the plurality of speakers 210 in response to the executed application. For example, the setting for each of the plurality of speakers 210 corresponding to the translation-related application may be previously stored in the memory (e.g., the memory 130 of FIG. 1). However, the disclosure is not limited thereto, and in an embodiment, the processor 250 may identify or adjust the setting for each of the plurality of speakers 210 in real time based on an obtained sound.

In an embodiment, the setting for each of the plurality of speakers 210 according to the execution of the application may be a setting for improving a recognition rate for an input sound. In an embodiment, it may be assumed that a user (or a caller) is in a call state and the translation-related application is running. When a first sound of the caller is input through the microphone 220 (or the at least one microphone), the processor 250 may output a second sound (or a loopback sound), in which the first sound of the caller is converted (or translated) into a designated language, to at least one of the plurality of speakers 210 through an automatic speech recognition (ASR) module described later.

In an embodiment, as the converted second sound of the caller is output to at least one of the plurality of speakers 210, the user may identify whether the first sound has been correctly translated, or whether a speech corresponding to the user's second sound has ended. In an embodiment, the processor 250 may identify whether the speech corresponding to the user's second sound has ended. For example, when a time during which there is no speech is equal to or greater than a designated time (e.g., 1.5 seconds), the processor 250 may determine that the speech corresponding to the second sound has ended.

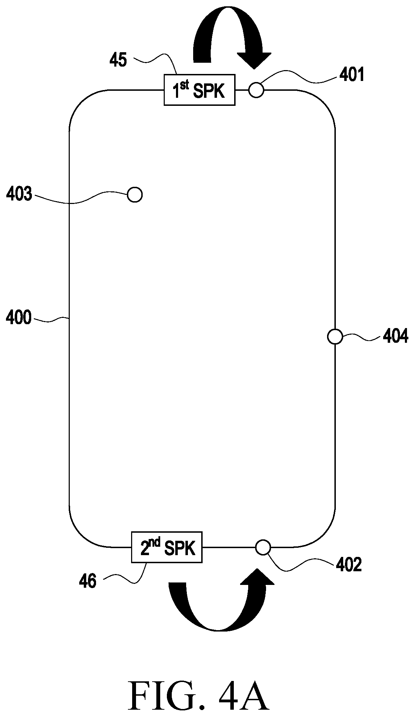

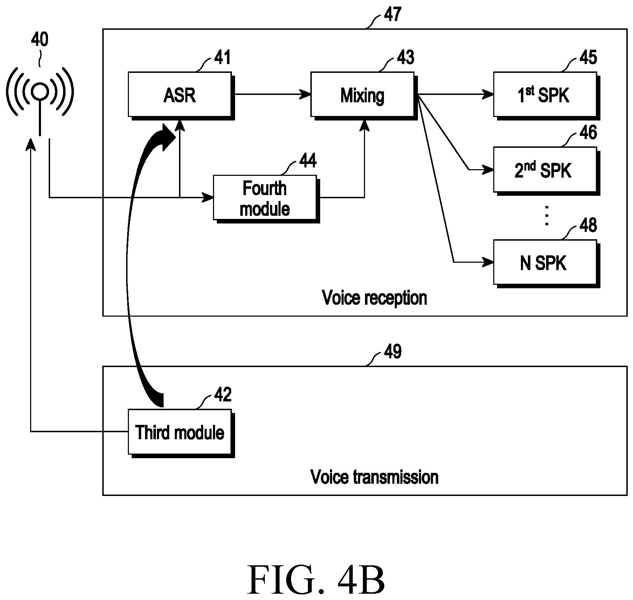

In an embodiment, when the converted second sound is output to at least one of the plurality of speakers 210, the converted second sound may be input to the at least one microphone 220, and as the converted second sound and the caller's sound are input together, the recognition rate for the caller's sound may decrease. In an embodiment, in order to improve the recognition rate for the input sound, the setting for each of the plurality of speakers 210 according to the execution of the application may be a setting for reducing an output volume of at least one speaker adjacent to the at least one microphone 220. Alternatively, the setting for each of the plurality of speakers 210 may be a setting for turning off the at least one speaker adjacent to the at least one microphone 220. The setting for each of the plurality of speakers 210 will be described in detail with reference to FIGS. 4A and 4B.

In an embodiment, the processor 250 may convert a first sound corresponding to a first language into a second sound corresponding to a second language by using the ASR module. In an embodiment, the ASR module may be a module that analyzes an input sound, converts it into text (or text-type data), and converts the converted text-type data into a sound corresponding to a designated language (e.g., a text-to-speech (TTS) function) to output the sound.

In an embodiment, the ASR module may be stored in the electronic device 200, to which the disclosure is not limited, and in an embodiment, the ASR module may be stored in an external device (e.g., the server 108 of FIG. 1). In an embodiment, when the ASR module is stored in the server, the processor 250 may transmit the first sound to the server through the communication module 240, or receive the second sound converted by the ASR module from the server. For example, when the ASR module is stored in the electronic device 200, the processor 250 may identify the second sound through the ASR module stored in the electronic device 200. Alternatively, when the ASR module is stored in the server, the processor 250 may obtain information about the second sound from the server through the communication module 240.

In an embodiment, when the first sound corresponding to the first language is input (or received) through the at least one microphone 220, the processor 250 may obtain, through the ASR module, the second sound in which the first sound is converted into the second language. For example, it may be assumed that a sound including a Korean speech is received through the at least one microphone 220. The ASR module may convert the received Korean speech into text, and convert the converted text into a sound corresponding to a designated language (e.g., English). According to an embodiment, the process of converting into the text may be omitted.

In an embodiment, the processor 250 may output the converted sound through at least one of the plurality of speakers based on the identified setting corresponding to the translation-related application.

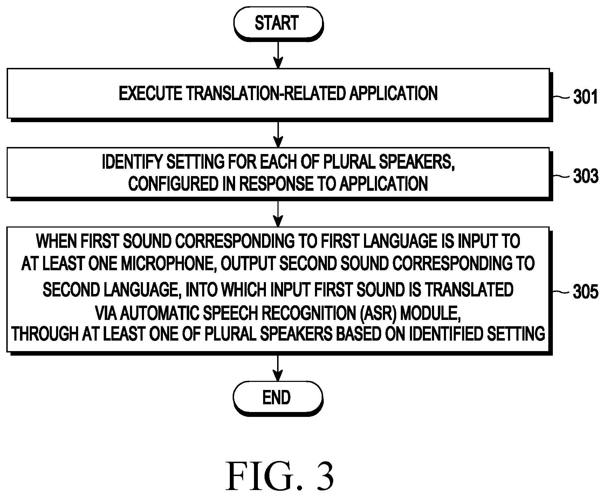

FIG. 3 is a flowchart illustrating a method for operating an electronic device (e.g., the electronic device 200 of FIG. 2) according to an embodiment.

A method for operating an electronic device according to various embodiments will be described in detail. According to various embodiments, operations described below as being performed by the electronic device may be executed by a processor (e.g., the processor 250 of FIG. 2) including at least one processing circuitry of the electronic device. According to an embodiment, the operations performed by the electronic device may be executed by instructions which are stored in memory (e.g., the memory 230 of FIG. 2) and which, when executed, cause the processor 250 to operate. In the following embodiments, each operation may be performed sequentially, but not necessarily. For example, the order of operations may be changed, or at least two operations may be performed in parallel. Depending on implementation, a specific operation may be omitted.

Referring to FIG. 3, according to an embodiment, in operation 301, the electronic device may execute a translation-related application. In an embodiment, the electronic device may use the translation-related application to perform translation on a sound (e.g., a caller's sound) input through a microphone (e.g., the at least one microphone 220 of FIG. 2) included in the electronic device.

According to an embodiment, in operation 303, the electronic device may identify a setting for each of a plurality of speakers (e.g., the plurality of speakers 210 of FIG. 2) configured in response to the application. In an embodiment, when the translation-related application is executed, the electronic device may identify the setting for each of the plurality of speakers corresponding to the application. In an embodiment, the setting for each of the plurality of speakers may be stored in memory (e.g., the memory 130 of FIG. 1). However, the disclosure is not limited thereto, and in an embodiment, the setting for each of the plurality of speakers may be changed in real time.

In an embodiment, the setting for each of the plurality of speakers according to the execution of the application may be a setting for reducing an output volume of at least one speaker adjacent to the at least one microphone. Alternatively, the setting for each of the plurality of speakers may be a setting for turning off the at least one speaker adjacent to the at least one microphone.

In an embodiment, in operation 305, when a first sound corresponding to a first language is input through the at least one microphone, the electronic device may output a second sound (or a loopback sound) corresponding to a second language through at least one speaker among the plurality of speakers based on the identified setting. In this case, the second sound corresponding to the second language may be a sound in which the input first sound is converted through an ASR module.

In an embodiment, it may be assumed that a sound including a Korean speech is input through the at least one microphone. The electronic device may convert the sound including the Korean speech into text-type data by using the ASR module. The electronic device may convert the text-type data into a second sound corresponding to English by using the ASR module. The electronic device may output the second sound corresponding to English based on the setting for each of the plurality of speakers described above. For example, the electronic device may control outputs of the plurality of speakers such that the second sound is not output from a first speaker adjacent to the microphone included in the electronic device, but the second sound is output through a second speaker other than the first speaker.

Accordingly, a problem that may occur due to a loopback sound for improving user usability in connection with a speech translation function (e.g., a decrease in a recognition rate related to a translated sound) may be solved.

FIG. 4A is a diagram illustrating a setting for each of a plurality of speakers (e.g., the plurality of speakers 210 of FIG. 2) according to an embodiment. FIG. 4B is a diagram illustrating a method for outputting a sound according to an embodiment.

Referring to FIG. 4A, according to an embodiment, an electronic device 400 (e.g., the electronic device 200 of FIG. 2) may include a plurality of speakers 45 and 46 including a first speaker 45 and a second speaker 46, and a plurality of microphones 401, 402, 403, and 404 (e.g., the at least one microphone 220 of FIG. 2).

In an embodiment, the electronic device may identify a setting for each of the plurality of speakers 45 and 46 based on a recognition rate (e.g., the recognition rate in FIG. 2) corresponding to a second sound (or a loopback sound). In an embodiment, the recognition rate corresponding to the second sound may refer to the accuracy of conversion corresponding to the second sound when a first sound (e.g., the first sound of FIG. 2) corresponding to a first language input through at least one microphone (at least one of 401, 402, 403, and 404) included in the electronic device 400 is converted into the second sound corresponding to a second language. However, the disclosure is not limited thereto.

In an embodiment, when the converted second sound is output to at least one of the plurality of speakers 45 and 46, the converted sound may be input to at least one microphone (at least one of 401, 402, 403, and 404), and as the converted sound and the caller's sound are input together, a recognition rate for the caller's sound may decrease. For example, it may be assumed that a translation-related application (e.g., the translation-related application of FIG. 2) is executed. When the second sound is output to the plurality of speakers 45 and 46, the output second sound may be input again through microphones 401 and 402 adjacent to the plurality of speakers 45 and 46. In this case, a situation (or a double-talk condition) in which the second sound output through the speakers is input to the same microphone together with the user's sound may occur, and a recognition rate corresponding to the second sound may decrease.

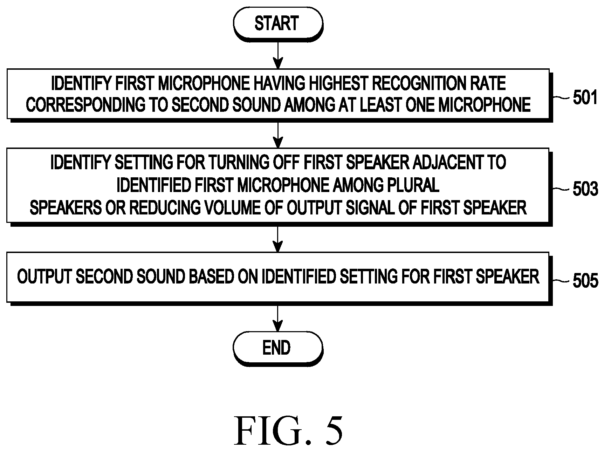

According to an embodiment, the electronic device 400 may identify the setting for each of the plurality of speakers 45 and 46 for preventing the recognition rate corresponding to the second sound from being reduced. For example, when the translation-related application is executed, the electronic device 400 may identify a setting for causing an output of each of the plurality of speakers 45 and 46 to be less than a designated level. Alternatively, for example, the electronic device 400 may identify a first microphone 402 having the highest recognition rate corresponding to the second sound, and identify a setting for turning off the second speaker 46 adjacent to the identified first microphone 402. This will be described in detail with reference to FIG. 5.

Referring to FIG. 4B, according to an embodiment, the electronic device 400 may include a plurality of modules for outputting a sound.

According to an embodiment, the electronic device 400 may include a first module 49 for obtaining a caller's sound and a second module 47 for obtaining and outputting a receiver's (or a call counterpart's) sound. In an embodiment, the first module 49 may include a third module 42 for, when the caller's sound is obtained, processing the obtained caller's sound. In an embodiment, the second module 47 may include an ASR module 41 (e.g., the ASR module of FIG. 2) for performing conversion on an input sound. In an embodiment, the second module 47 may include a fourth module 44 for, when a receiver's sound 40 is obtained, processing the obtained receiver's sound 40. In an embodiment, the second module 47 may include a mixing module 43 for mixing a sound (or an audio signal corresponding to the sound) converted through the ASR module 41 and the receiver's sound processed through the fourth module 44. In an embodiment, the second module 47 may include a plurality of speakers 45, 46, and 48 (e.g., the plurality of speakers 210 of FIG. 2) for outputting the sound mixed through the mixing module 43.

In an embodiment, when the receiver's sound 40 corresponding to a first language is received, the electronic device 400 may identify a sound in which the received sound 40 is converted into a second language by using the ASR module 41, and output the identified sound through at least one speaker among the plurality of speakers 45, 46, 47, and 48. In an embodiment, when the caller's sound corresponding to the second language is obtained through the third module 42, the electronic device 400 may identify a sound in which the obtained caller's sound is converted into the first language by using the ASR module 41, and output the identified sound through at least one speaker among the plurality of speakers 45, 46, 47, and 48.

In an embodiment, when the first sound of the caller is input through at least one microphone, the electronic device 400 may identify the second sound corresponding to the second language by using the ASR module 41. In this case, an echo that may affect the recognition rate corresponding to the second sound may be input through the at least one microphone together with the first sound. In an embodiment, the echo that may affect the recognition rate corresponding to the second sound may include at least one of the receiver's sound 40, the sound to which the receiver's sound 40 is converted through the ASR module 41, or the second sound to which the caller's first sound is converted. In an embodiment, the electronic device 400 may identify a ratio of an echo input to each of the at least one microphone in order to identify a microphone having a highest recognition rate corresponding to the second sound. This will be described later in detail with reference to FIG. 5.

FIG. 5 is a flowchart illustrating a method for outputting a second sound (e.g., the second sound of FIG. 2) according to an embodiment.

Referring to FIG. 5, according to an embodiment, in operation 501, an electronic device (e.g., the electronic device 200 of FIG. 2) may identify a first microphone having a highest recognition rate corresponding to a second sound (e.g., the recognition rate corresponding to the second sound of FIG. 4) among at least one microphone (e.g., the at least one microphone 220 of FIG. 2).

In an embodiment, the electronic device may identify the first microphone having the highest recognition rate corresponding to the second sound based on a signal-to-echo ratio (SER) value corresponding to each of the at least one microphone. In an embodiment, the electronic device may obtain the SER value by using an echo (e.g., the echo of FIG. 4) corresponding to each of the at least one microphone. In an embodiment, the echo may include at least one of a receiver's sound (e.g., the receiver's sound 40 of FIG. 4), a sound to which the receiver's sound is converted through an ASR module (e.g., the ASR module of FIG. 2), or a second sound to which a caller's first sound (e.g., the first sound of FIG. 2) is converted. In an embodiment, the electronic device may identify the SER value by calculating a ratio of an echo among sounds input through each of the at least one microphone, and identify a microphone having a largest identified SER value as the first microphone. However, the disclosure is not limited thereto.

In an embodiment, the electronic device may identify a microphone at a relatively long distance from the plurality of speakers as the first microphone. Alternatively, in an embodiment, the electronic device may identify a microphone having a largest difference between the volume of the echo and the volume of a sound excluding the echo as the first microphone.

According to an embodiment, in operation 503, the electronic device may identify a setting for turning off a first speaker adjacent to the identified first microphone among a plurality of speakers (e.g., the plurality of speakers 210 of FIG. 2) or reducing the volume of an output signal of the first speaker. In an embodiment, the electronic device may identify the first speaker adjacent to the first microphone. In an embodiment, memory (e.g., the memory 130 of FIG. 1) may include information about a speaker adjacent to each of the at least one microphone included in the electronic device. The electronic device may identify the first speaker adjacent to the first microphone, and identify a setting for turning off the identified first speaker or reducing the volume of the output signal of the first speaker.

According to an embodiment, in operation 505, the electronic device may output the second sound based on the identified setting for the first speaker. In an embodiment, when the setting for turning off the first speaker is identified, the electronic device may output the second sound through the remaining speakers excluding the first speaker among the plurality of speakers. In an embodiment, when the setting for reducing the volume of the output signal of the first speaker to a designated level is identified, the electronic device may control the first speaker to output the second sound with the output signal of the designated level.

According to the above-described example, when the second sound (loopback sound) is output, the electronic device may identify a designated microphone and identify a setting for each of the plurality of speakers based on the designated microphone so that the recognition rate corresponding to the second sound is increased. Accordingly, a sound may be translated with a high recognition rate even under a double-talk condition in which the translated sound of the caller is input together with the caller's sound.

As illustrated in Table 1 below, according to the above-described embodiments, it may be identified that when the first speaker is turned off or the volume of the output signal of the first speaker is reduced, the recognition rate corresponding to the second sound is relatively increased compared to a case where a setting value is not applied. Herein, a 'Pub noise environment' refers to an environment where an electronic device is located in a cafe, and an 'xRoad noise environment' refers to an environment where an electronic device is located on a roadside. In an embodiment, the case where the setting value is not applied may mean a case where the output signal of the first speaker is not changed (e.g., a case where the volume of the output signal is not reduced or the first speaker is not turned off).

**[Table 1]**

| Recognition Rate | Case where the setting value is not applied | Case where the volume of the output signal of the first speaker is reduced | Case where the first speaker is turned off |
|---|---|---|---|
| Quiet environment | 88.9% | 91.0% | 95.6% |
| Pub noise environment | 80.7% | 82.2% | 92.6% |
| xRoad noise environment | 71.8% | 75.4% | 87.4% |

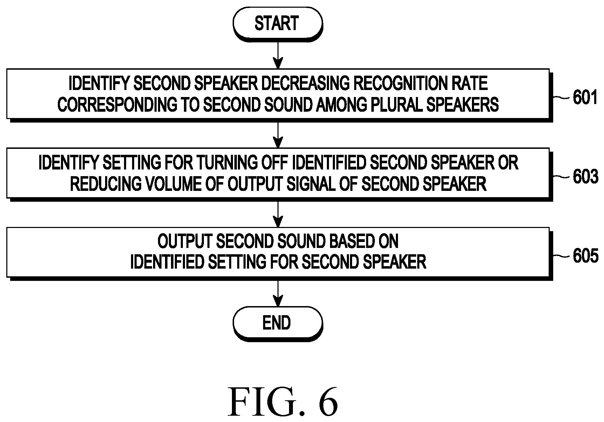

FIG. 6 is a flowchart illustrating a method for outputting a second sound (e.g., the second sound of FIG. 2) according to an embodiment.

Referring to FIG. 6, according to an embodiment, in operation 601, an electronic device (e.g., the electronic device 200 of FIG. 2) may identify a second speaker that decreases a recognition rate corresponding to a second sound (e.g., the recognition rate corresponding to the second sound of FIG. 2) among a plurality of speakers (e.g., the plurality of speakers 210 of FIG. 2).

In an embodiment, the electronic device may identify, as the second speaker, at least one speaker adjacent to at least one microphone (e.g., the at least one microphone 220 of FIG. 2) included in the electronic device among the plurality of speakers. In an embodiment, memory (e.g., the memory 130 of FIG. 1) may include information about a speaker adjacent to each of the at least one microphone included in the electronic device, and the electronic device may identify the second speaker based on the information stored in the memory. Alternatively, in an embodiment, the electronic device may identify, as the second speaker, a speaker that decreases the recognition rate corresponding to the second sound as the volume of an output signal increases among the plurality of speakers.

According to an embodiment, in operation 603, the electronic device may identify a setting for turning off the identified second speaker or reducing the volume of an output signal of the second speaker.

According to an embodiment, in operation 605, the electronic device may output the second sound based on the identified setting for the second speaker.

For example, referring to FIG. 4A, the electronic device may identify the speaker 45 adjacent to the microphone 401 as a second speaker, and identify the speaker 46 adjacent to the microphone 402 as a second speaker. The electronic device may turn off the identified second speakers 45 and 46 or reduce the volumes of the output signals of the second speakers to a designated level. However, the disclosure is not limited thereto, and the electronic device may control an output of any one speaker out of the identified second speakers 45 and 46. For example, the electronic device may identify the speaker 46 that affects the recognition rate more out of the identified second speakers 45 and 46, and may turn off the identified speaker 46 or reduce the volume of the output signal of the second speaker to the designated level.

In an embodiment, based on identifying the second speaker, the electronic device may output a third sound that is different from the second sound through the second speaker. In an embodiment, the third sound may be, but not limited to, a beep sound type of sound, and in an embodiment, the third sound may be various types of sounds for notifying the user that the second sound is currently being provided to a receiver.

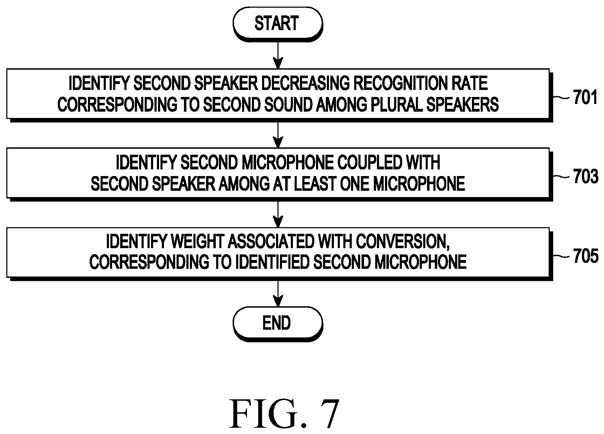

FIG. 7 is a flowchart illustrating a method for identifying a weight associated with conversion according to an embodiment.

Referring to FIG. 7, according to an embodiment, in operation 701, an electronic device (e.g., the electronic device 200 of FIG. 2) may identify a second speaker (e.g., the second speaker of FIG. 6) that decreases a recognition rate corresponding to a second sound (e.g., the recognition rate of FIG. 2) among a plurality of speakers (e.g., the plurality of speakers 210 of FIG. 2). In an embodiment, the electronic device may identify, as the second speaker, at least one speaker adjacent to at least one microphone (e.g., the at least one microphone 220 of FIG. 2) included in the electronic device among the plurality of speakers. Alternatively, in an embodiment, the electronic device may identify, as the second speaker, a speaker which decreases the recognition rate corresponding to the second sound (e.g., the second sound of FIG. 2) as the volume of an output signal of the speaker increases among the plurality of speakers.

According to an embodiment, in operation 703, the electronic device may identify a second microphone coupled with the second speaker among the at least one microphone. In an embodiment, the second microphone coupled with the second speaker may be a microphone whose input sound has a volume decreasing as the volume of an output sound output through the second speaker decreases, or whose input sound increases as the volume of the sound output through the second speaker increases. In an embodiment, a plurality of second microphones coupled with the second speaker may be provided.

According to an embodiment, in operation 705, the electronic device may identify a weight associated with conversion corresponding to the identified second microphone. In an embodiment, the weight associated with conversion may be a ratio of a sound input from each of the at least one microphone used for conversion when a first sound (e.g., the first sound of FIG. 2) is converted into a second sound through an ASR module (e.g., the ASR module of FIG. 2). For example, it may be assumed that three microphones are included in the electronic device, and weights associated with conversion corresponding to the respective three microphones are 0.1, 0.3, and 0.6, respectively. In this case, the ASR module may apply a weight corresponding to each microphone to a sound input through each microphone, and obtain the second sound by using each sound to which the weight is applied.

In an embodiment, the weight corresponding to each of the at least one microphone may be a predetermined value. In an embodiment, the weight corresponding to each of the at least one microphone may be stored in memory (e.g., the memory 130 of FIG. 1). When the second microphone is identified, the electronic device may change the weight corresponding to the second microphone. For example, the electronic device may lower the weight corresponding to the second microphone to a designated value. However, the disclosure is not limited thereto, and even when the weight corresponding to each of the at least one microphone is not stored in the memory, the electronic device may identify the weight corresponding to the identified second microphone as a designated value when the second microphone is identified.

In an embodiment, the electronic device may identify a second sound corresponding to a second language through the ASR module based on the identified weight. For example, it may be assumed that three microphones are included in the electronic device, and weights associated with conversion corresponding to the respective three microphones are 0.1, 0.3, and 0.6, respectively. When a weight corresponding to the second microphone among the three microphones is 0.3, the electronic device may lower the weight corresponding to the second microphone to a designated value (e.g., 0.1) and increase the weights corresponding to the microphones other than the second microphone. The electronic device may identify the second sound corresponding to the second language through the ASR module based on the changed weights.

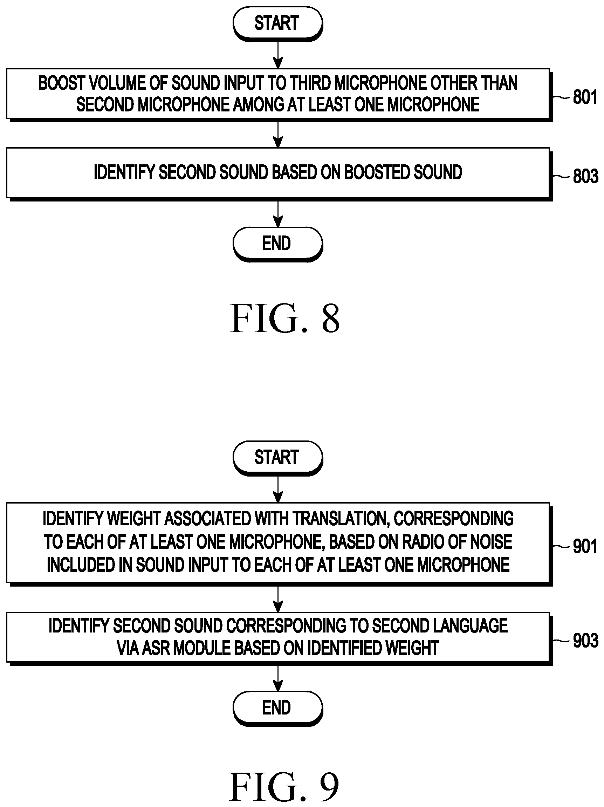

FIG. 8 is a flowchart illustrating a method for identifying a second sound (e.g., the second sound of FIG. 2) according to an embodiment.

Referring to FIG. 8, according to an embodiment, in operation 801, an electronic device (e.g., the electronic device 200 of FIG. 2) may boost the volume of a sound input to a third microphone that is different from a second microphone (e.g., the second microphone of FIG. 7) among at least one microphone (e.g., the at least one microphone 220 of FIG. 2).

In an embodiment, the electronic device may identify a second speaker (e.g., the second speaker of FIG. 6) that decreases a recognition rate (e.g., the recognition rate of FIG. 2) corresponding to a second sound among a plurality of speakers (e.g., the plurality of speakers 210 of FIG. 2). In an embodiment, the electronic device may identify a second microphone coupled with the identified second speaker among the at least one microphone. In an embodiment, the electronic device may identify, as a third microphone, at least one microphone excluding the second microphone among the at least one microphone included in the electronic device, and boost the volume of a sound input to the identified third microphone. For example, the electronic device may identify the remaining microphones other than the second microphone as third microphones.

According to an embodiment, in operation 803, the electronic device may identify the second sound based on the boosted sound. Accordingly, since a relative volume of a sound input through the second microphone coupled with the second speaker that decreases the recognition rate is reduced, the decrease of the recognition rate caused by a loopback sound output through the second speaker may be improved.

FIG. 9 is a flowchart illustrating a method for identifying a second sound (e.g., the second sound of FIG. 2) based on noise according to an embodiment.

Referring to FIG. 9, according to an embodiment, in operation 901, an electronic device (e.g., the electronic device 200 of FIG. 2) may identify a weight associated with conversion (e.g., the weight of FIG. 7) corresponding to each of at least one microphone based on a ratio of noise included in a sound input to each of the at least one microphone (e.g., the at least one microphone 220 of FIG. 2).

In an embodiment, the noise included in the sound may be noise generated from a surrounding environment. In an embodiment, the ratio of the noise may be a ratio between a first sound input through the microphone and noise input through the microphone. In an embodiment, the electronic device may identify the ratio of noise corresponding to each microphone based on a sound input to each of the at least one microphone.

However, the disclosure is not limited thereto, and the noise included in the sound may be an echo (e.g., the echo of FIG. 4). In an embodiment, the electronic device may identify a signal-to-echo ratio (SER) (e.g., the SER of FIG. 5) corresponding to each of the at least one microphone as the ratio of noise, based on the sound input through each of the at least one microphone.

In an embodiment, the electronic device may lower a weight corresponding to a microphone having a relatively high ratio of noise among the at least one microphone to a designated value, and relatively increase weights corresponding to the remaining microphones. Alternatively, in an embodiment, the electronic device may turn off a microphone having a relatively high ratio of noise.

According to an embodiment, in operation 903, the electronic device may identify a second sound corresponding to a second language through an ASR module (e.g., the ASR module of FIG. 2) based on the identified weight.

For example, it may be assumed that three microphones are included in the electronic device, and weights associated with conversion corresponding to the respective three microphones are 0.1, 0.3, and 0.6. In an embodiment, the electronic device may identify a ratio of noise included in a sound input to each of the three microphones. When the ratio of noise corresponding to a third microphone among the three microphones is highest, the electronic device may lower the weight (0.6) corresponding to the third microphone to a designated value (e.g., 0.1) and increase the weights corresponding to the microphones other than the third microphone. The electronic device may identify the second sound corresponding to the second language through the ASR module based on the changed weights.

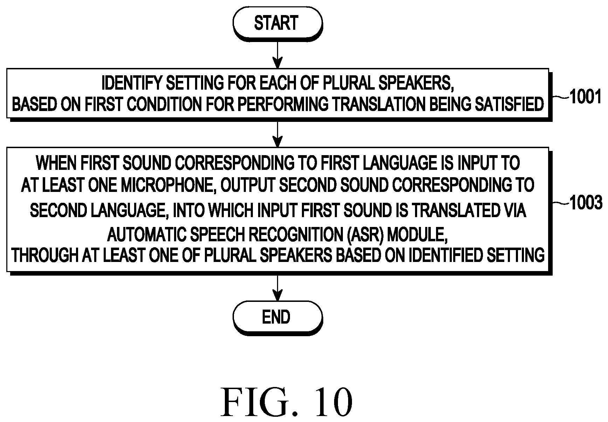

FIG. 10 is a flowchart illustrating a method for operating an electronic device (e.g., the electronic device 200 of FIG. 2) according to an embodiment.

Referring to FIG. 10, according to an embodiment, in operation 1001, based on satisfying a first condition for performing translation, the electronic device may identify a setting (e.g., the setting for each of the plurality of speakers in FIG. 3) for each of a plurality of speakers (e.g., the plurality of speakers 210 of FIG. 2). In an embodiment, the first condition for performing translation may be a condition that an input corresponding to execution of a call application is identified. For example, when an input corresponding to execution of a call application is received through an input module (e.g., the input module 150 of FIG. 1), the electronic device may identify that the first condition is satisfied. When identifying that the first condition is satisfied, the electronic device may identify a setting for each of the plurality of speakers.

In an embodiment, in operation 1003, when a first sound (e.g., the first sound of FIG. 3) corresponding to a first language is input through at least one microphone (e.g., the at least one microphone 220 of FIG. 2), the electronic device may output a second sound (e.g., the first sound of FIG. 3) corresponding to a second language through at least one speaker among the plurality of speakers based on the identified setting. In this case, the second sound corresponding to the second language may be a sound to which the input first sound is converted through an ASR module.

The electronic device 101 or 200 according to an embodiment of the disclosure may include the plurality of speakers 210, the at least one microphone 220, the memory 230 storing instructions, and the at least one processor 250.

According to an embodiment, the instructions, when executed by the at least one processor individually or collectively, may cause the electronic device 101 or 200 to execute an application related to translation.

According to an embodiment, the instructions, when executed by the at least one processor individually or collectively, may cause the electronic device 101 or 200 to identify a setting for each of the plurality of speakers 210, the setting being set corresponding to the application.

According to an embodiment, the instructions, when executed by the at least one processor individually or collectively, may cause the electronic device 101 or 200 to, in response to a first sound corresponding to a first language being input through the at least one microphone 220, output, through at least one speaker among the plurality of speakers 210, a second sound corresponding to a second language based on the identified setting, the second sound being converted from the input first sound through an ASR module.

According to an embodiment, the instructions, when executed by the at least one processor individually or collectively, may cause the electronic device 101 or 200 to, based on a recognition rate corresponding to the second sound, identify the setting for each of the plurality of speakers 210.

According to an embodiment, the instructions, when executed by the at least one processor individually or collectively, may cause the electronic device 101 or 200 to, among the at least one microphone 220, identify a first microphone with a highest recognition rate corresponding to the second sound.

According to an embodiment, the instructions, when executed by the at least one processor individually or collectively, may cause the electronic device 101 or 200 to identify a setting for turning off a first speaker, among the plurality of speakers 210, adjacent to the identified first microphone or reducing a volume of an output signal of the first speaker.

According to an embodiment, the instructions, when executed by the at least one processor individually or collectively, may cause the electronic device 101 or 200 to output the second sound based on the identified setting for the first speaker.

According to an embodiment, the instructions, when executed by the at least one processor individually or collectively, may cause the electronic device 101 or 200 to, among the plurality of speakers 210, identify a second speaker that reduces the recognition rate corresponding to the second sound.

According to an embodiment, the instructions, when executed by the at least one processor individually or collectively, may cause the electronic device 101 or 200 to identify a setting for turning off the second speaker or reducing a volume of an output signal of the second speaker.

According to an embodiment, the instructions, when executed by the at least one processor individually or collectively, may cause the electronic device 101 or 200 to output the second sound based on the identified setting for the second speaker.

According to an embodiment, the instructions, when executed by the at least one processor individually or collectively, may cause the electronic device 101 or 200 to, based on identifying the second speaker, output a third sound different from the second sound through the second speaker.

According to an embodiment, the instructions, when executed by the at least one processor individually or collectively, may cause the electronic device 101 or 200 to, among the plurality of speakers 210, identify a second speaker that reduces the recognition rate corresponding to the second sound.

According to an embodiment, the instructions, when executed by the at least one processor individually or collectively, may cause the electronic device 101 or 200 to, among the at least one microphone 220, identify a second microphone coupled to the second speaker.

According to an embodiment, the instructions, when executed by the at least one processor individually or collectively, may cause the electronic device 101 or 200 to identify a weight associated with the conversion, corresponding to the identified second microphone.

According to an embodiment, the instructions, when executed by the at least one processor individually or collectively, may cause the electronic device 101 or 200 to identify the second sound corresponding to the second language through the ASR module based on the identified weight.

According to an embodiment, the second microphone coupled to the second speaker may be configured such that a volume of a sound input through the second microphone increases as a volume of a sound output through the second speaker increases, or the volume of the sound input through the second microphone decreases as the volume of the sound output through the second speaker decreases.

According to an embodiment, the instructions, when executed by the at least one processor individually or collectively, may cause the electronic device 101 or 200 to boost a volume of a sound input through a third microphone, different from the second microphone, among the at least one microphone 220.

According to an embodiment, the instructions, when executed by the at least one processor individually or collectively, may cause the electronic device 101 or 200 to identify the second sound based on the boosted sound.

According to an embodiment, the instructions, when executed by the at least one processor individually or collectively, may cause the electronic device 101 or 200 to identify a weight associated with the conversion, corresponding to each of the at least one microphone, based on a ratio of noise included in the sound input through each of the at least one microphone 220.

According to an embodiment, the instructions, when executed by the at least one processor individually or collectively, may cause the electronic device 101 or 200 to identify the second sound corresponding to the second language through the ASR module based on the identified weight.

A method for operating the electronic device 101 or 200 according to an embodiment of the disclosure may include executing an application related to translation.

According to an embodiment, the method may include identifying a setting for each of the plurality of speakers 210, the setting being set corresponding to the application.

According to an embodiment, the method may include, in response to a first sound corresponding to a first language being input through the at least one microphone 220, outputting, through at least one speaker among the plurality of speakers 210, a second sound corresponding to a second language based on the identified setting, the second sound being converted from the input first sound through an automatic speech recognition ASR module.

According to an embodiment, the identifying of the setting may include, based on a recognition rate corresponding to the second sound, identifying the setting for each of the plurality of speakers 210.

According to an embodiment, the identifying of the setting may include, among the at least one microphone 220, identifying a first microphone with a highest recognition rate corresponding to the second sound.

According to an embodiment, the identifying of the setting may include identifying a setting for turning off a first speaker, among the plurality of speakers 210, adjacent to the identified first microphone or reducing a volume of an output signal of the first speaker.

According to an embodiment, the outputting may include outputting the second sound based on the identified setting for the first speaker.

According to an embodiment, the identifying of the setting may include, among the plurality of speakers 210, identifying a second speaker that reduces the recognition rate corresponding to the second sound.

According to an embodiment, the identifying of the setting may include identifying a setting for turning off the second speaker or reducing a volume of an output signal of the second speaker.

According to an embodiment, the outputting may include outputting the second sound based on the identified setting for the second speaker.

According to an embodiment, the outputting may include, based on identifying the second speaker, outputting a third sound different from the second sound through the second speaker.

According to an embodiment, the method may include identifying a second speaker that reduces the recognition rate corresponding to the second sound.

According to an embodiment, the method may include, among the at least one microphone 220, identifying a second microphone coupled to the second speaker.

According to an embodiment, the method may include identifying a weight associated with the conversion, corresponding to the identified second microphone.

According to an embodiment, the method may include identifying the second sound corresponding to the second language through the ASR module based on the identified weight.

According to an embodiment, the second microphone coupled to the second speaker may be configured such that a volume of a sound input through the second microphone increases as a volume of a sound output through the second speaker increases, or the volume of the sound input through the second microphone decreases as the volume of the sound output through the second speaker decreases.

According to an embodiment, the method may include boosting a volume of a sound input through a third microphone, different from the second microphone, among the at least one microphone 220.

According to an embodiment, the method may further include identifying the second sound based on the boosted sound.

In a computer-readable storage medium 130 storing instructions according to an embodiment of the disclosure, the instructions, when executed by the at least one processor 250 of the electronic device 101 or 200 individually or collectively, may cause the electronic device 101 or 200 to execute an application related to translation.

According to an embodiment, the instructions, when executed by the at least one processor 250 of the electronic device 101 or 200 individually or collectively, may cause the electronic device 101 or 200 to identify a setting for each of the plurality of speakers 210, the setting being set corresponding to the application.

According to an embodiment, the instructions, when executed by the at least one processor 250 of the electronic device 101 or 200 individually or collectively, may cause the electronic device 101 or 200 to, in response to a first sound corresponding to a first language being input through the at least one microphone 220, output, through at least one speaker among the plurality of speakers 210, a second sound corresponding to a second language based on the identified setting, the second sound being converted from the input first sound through an ASR module.

The effects obtainable from the disclosure are not limited to the effects mentioned above, and other effects not mentioned will be clearly understood by those skilled in the art to which the disclosure pertains.

As used herein, the term "if" will be understood to mean "when," "upon," "in response to determining," or "in response to detecting," depending on the context. Similarly, "if it is determined that" or "if [a stated condition or event] is detected" will optionally be understood to mean "upon determining," "in response to determining," "upon detecting [the stated condition or event]," or "in response to detecting [the stated condition or event]."

The apparatus described above may be implemented as hardware components, software components, and/or a combination of hardware components and software components. For example, the apparatus and components described in the embodiments may be implemented using one or more general-purpose computers or special-purpose computers, such as a processor, a controller, an arithmetic logic unit (ALU), a digital signal processor, a microcomputer, a field programmable gate array (FPGA), a programmable logic unit (PLU), a microprocessor, or any other device capable of executing and responding to instructions. A processing device (or processing circuitry) may execute an operating system (OS) and one or more software applications running on the operating system. In addition, the processing device may access, store, manipulate, process, and generate data in response to the execution of software. For convenience of understanding, a processing device may be described as being used in the singular. However, those skilled in the art will appreciate that the processing device may include a plurality of processing elements and/or multiple types of processing elements. For example, the processing device may include a plurality of processors, or a combination of a processor and a controller. In addition, other processing configurations, such as parallel processors, are also possible.

Software may include a computer program, code, instructions, or a combination of one or more thereof, and may configure the processing device to operate as desired or may independently or collectively command the processing device. The software and/or data may be embodied in any type of machine, component, physical device, computer storage medium, or apparatus in order to be interpreted by the processing device or to provide instructions or data to the processing device. The software may also be distributed over network-connected computer systems to be stored or executed in a distributed manner. The software and data may be stored in one or more computer-readable recording media.

The method according to an embodiment may be implemented in the form of program instructions executable through various computer means and recorded on a computer-readable medium. In this case, the medium may continuously store a computer-executable program, or temporarily store the program for execution or downloading. In addition, the medium may be various recording means or storage means in which a single hardware unit or a combination of several hardware units is combined, and is not limited to a medium directly connected to a specific computer system, but may be distributed over a network. Examples of the medium may include magnetic media such as hard disks, floppy disks, and magnetic tapes; optical recording media such as CD-ROMs and DVDs; magneto-optical media such as floptical disks; and media specifically configured to store program instructions, including ROM, RAM, and flash memory. In addition, as another example of the medium, there may be recording media or storage media managed by an app store distributing applications, or sites and servers providing or distributing various other software.

Although the embodiments have been described above with reference to limited embodiments and drawings, various modifications and variations can be made from the above description by those skilled in the art. For example, appropriate results may be achieved even if the described techniques are performed in an order different from the described method, and/or components such as the described system, structure, apparatus, and circuit are combined or coupled in a form different from the described method, or replaced or substituted by other components or equivalents.

Therefore, other implementations, other embodiments, and equivalents to the claims also fall within the scope of the claims described below.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
a plurality of speakers (210);
at least one microphone (220);
memory (230) storing instructions; and
at least one processor (250);
wherein the instructions, when executed by the at least one processor individually or collectively, cause the electronic device to:
execute an application related to translation,
identify a setting for each of the plurality of speakers (210), the setting being set corresponding to the application, and
in response to a first sound corresponding to a first language being input through the at least one microphone (220), output, through at least one speaker among the plurality of speakers (210), a second sound corresponding to a second language based on the identified setting, the second sound being converted from the input first sound through an automatic speech recognition (ASR) module.

2. The electronic device (101; 200) of claim 1, wherein the instructions, when executed by the at least one processor individually or collectively, cause the electronic device to:
based on a recognition rate corresponding to the second sound, identify the setting for each of the plurality of speakers (210).

3. The electronic device (101; 200) of claim 1 or 2, wherein the instructions, when executed by the at least one processor individually or collectively, cause the electronic device to:
among the at least one microphone (220), identify a first microphone with a highest recognition rate corresponding to the second sound,
identify a setting for turning off a first speaker, among the plurality of speakers (210), adjacent to the identified first microphone or reducing a volume of an output signal of the first speaker, and
output the second sound based on the identified setting for the first speaker.

4. The electronic device (101; 200) of any one of claims 1 to 3, wherein the instructions, when executed by the at least one processor individually or collectively, cause the electronic device to:
among the plurality of speakers (210), identify a second speaker that reduces the recognition rate corresponding to the second sound,
identify a setting for turning off the second speaker or reducing a volume of an output signal of the second speaker, and
output the second sound based on the identified setting for the second speaker.

5. The electronic device (101; 200) of any one of claims 1 to 4, wherein the instructions, when executed by the at least one processor individually or collectively, cause the electronic device to:
based on identifying the second speaker, output a third sound different from the second sound through the second speaker.

6. The electronic device (101; 200) of any one of claims 1 to 5, wherein the instructions, when executed by the at least one processor individually or collectively, cause the electronic device to:
among the plurality of speakers (210), identify a second speaker that reduces the recognition rate corresponding to the second sound,
among the at least one microphone (220), identify a second microphone coupled to the second speaker, and
identify a weight associated with the conversion, corresponding to the identified second microphone.

7. The electronic device (101; 200) of any one of claims 1 to 6, wherein the instructions, when executed by the at least one processor individually or collectively, cause the electronic device to:
identify the second sound corresponding to the second language through the ASR module based on the identified weight.

8. The electronic device (101; 200) of any one of claims 1 to 7, wherein the second microphone coupled to the second speaker is configured such that a volume of a sound input through the second microphone increases as a volume of a sound output through the second speaker increases, or the volume of the sound input through the second microphone decreases as the volume of the sound output through the second speaker decreases.

9. The electronic device (101; 200) of any one of claims 1 to 8, wherein the instructions, when executed by the at least one processor individually or collectively, cause the electronic device to:
boost a volume of a sound input through a third microphone, different from the second microphone, among the at least one microphone (220), and
identify the second sound based on the boosted sound.

10. The electronic device (101; 200) of any one of claims 1 to 9, wherein the instructions, when executed by the at least one processor individually or collectively, cause the electronic device to:
identify a weight associated with the conversion, corresponding to each of the at least one microphone, based on a ratio of noise included in the sound input through each of the at least one microphone (220), and
identify the second sound corresponding to the second language through the ASR module based on the identified weight.

11. A method for operating an electronic device (101; 200), comprising:
executing an application related to translation;
identifying a setting for each of a plurality of speakers (210), the setting being set corresponding to the application; and
in response to a first sound corresponding to a first language being input through at least one microphone (220), outputting, through at least one speaker among the plurality of speakers (210), a second sound corresponding to a second language based on the identified setting, the second sound being converted from the input first sound through an automatic speech recognition (ASR) module.

12. The method of claim 11, wherein the identifying of the setting includes, based on a recognition rate corresponding to the second sound, identifying the setting for each of the plurality of speakers (210).

13. The method of claim 11 or 12, wherein the identifying of the setting includes:
among the at least one microphone (220), identifying a first microphone with a highest recognition rate corresponding to the second sound; and
identifying a setting for turning off a first speaker, among the plurality of speakers (210), adjacent to the identified first microphone or reducing a volume of an output signal of the first speaker, and
wherein the outputting includes outputting the second sound based on the identified setting for the first speaker.

14. The method of any one of claims 11 to 13, wherein the identifying of the setting includes:
among the plurality of speakers (210), identifying a second speaker that reduces the recognition rate corresponding to the second sound; and
identifying a setting for turning off the second speaker or reducing a volume of an output signal of the second speaker, and
wherein the outputting includes outputting the second sound based on the identified setting for the second speaker.

15. The method of any one of claims 11 to 14, wherein the outputting includes, based on identifying the second speaker, outputting a third sound different from the second sound through the second speaker.
